# EUROPÄISCHE PATENTSCHRIFT

(11) **EP 0 653 033 B1**
(45) Veröffentlichungstag und Bekanntmachung des Hinweises auf die Patenterteilung: **04.09.1996**
(21) Anmeldenummer: 92911626.7
(22) Anmeldetag: 04.06.1992
(51) Int. Cl.: F16K 17/18, F16K 17/196, F16K 15/06

(54) **RÜCKSCHLAGVENTIL**
CHECK VALVE
SOUPAPE ANTI-RETOUR

(30) Priorität: 05.07.1991 AT 1355/91
(43) Veröffentlichungstag der Anmeldung: 17.05.1995
(73) Patentinhaber: IDEAL-STANDARD GMBH, D-53008 Bonn (DE)
(72) Erfinder: BERGMANN, Konrad, D-5560 Wittlich (DE)
(74) Vertreter: Puchberger, Rolf, Dipl. Ing.
(86) Internationale Anmeldenummer: EP9201239
(87) Internationale Veröffentlichungsnummer: WO9301435

(56) Entgegenhaltungen:
- US-A- 2 995 148
- US-A- 3 153 423
- US-A- 3 976 096
- US-A- 4 561 559

## Beschreibung

Die Erfindung bezieht sich auf ein Rückschlagventil, insbesondere für sanitäre Wasserarmaturen mit einem Ventilsitz und einem Ventilverschlußstück, das mit einem in Schließrichtung des Rückschlagventiles wirksamen, d.h. öffenbaren Überdruckventil ausgerüstet ist.

Es gibt Bestrebungen, Rückschlagventile verstärkt einzubauen, um z.B. im Falle eines Unterdruckes das Eindringen von Wasser in die Frischwasserversorgungsleitungen zu verhindern.

Kritisch kann der Einbau von Rückschlagventilen dann werden, wenn Rückschlagventile in Verbindung mit z.B. Einhebelmischbatterien zur Anwendung gelangen. Wird bei diesen Armaturen die Kaltwasserseite abgesperrt und nur die Warmwasserseite geöffnet, so kann bei dem dann ebenfalls geschlossenen Kaltwasserrückschlagventil das zwischen diesem und dem geschlossenen Kaltwasserventilsitz der Mischbatterie befindliche Wasser beim Betrieb der Warmwasserseite stark aufgeheizt werden, und zwar so stark, daß Systemdrücke entstehen, die zu Beschädigungen an den Armaturenbauteilen führen können. Diese Gefahr ist besonders groß bei Drücken über 16 bar.

Aus der US-PS 4 561 559 ist ein Rückschlagventil für Brennstoffabgabe bekannt, in dessen Ventilverschlußstück ein Überdruckventil vorgesehen ist, wobei sowohl das Ventilverschlußstück des Rückschlagventils als auch das Überdruckventil federbelastet sind. Eine solche Sicherheitsvorrichtung ist für eine Vorrichtung zur Brennstoffabgabe und deren Wartung selbstverständlich. Hohe Kosten sind aufgrund des Risikos vretretbar.

Zum Einsatz bei sanitären Wasserarmaturen muß aber die Sicherheitsvorrichtung billig in der Herstellung sein.

Der Erfindung liegt die Aufgabe zugrunde, ein Rückschlagventil für insbesondere sanitäre Wasserarmaturen zu schaffen, das mit einem relativ geringen Kostenaufwand herstellbar, einfach in seinem Aufbau und sicher in der Funktion ist.

Diese Aufgabe wird dadurch gelöst, daß sein Ventilverschlußstück aus einem Kegel und einer Kegelkappe zusammengesetzt ist, die in Schließrichtung des Rückschlagventiles mit einem eine seitliche Austrittsöffnung aufweisenden, haubenförmigen Aufsatz versehen ist, in dem sich das Ventilverschlußstück des Überdruckventiles befindet, während der Kegel in Öffnungsrichtung des Rückschlagventiles einen eine seitliche Eintrittsöffnung aufweisenden, rohrförmigen Fortsatz besitzt, dessen oberes Ende einen Ventilsitz für das Ventilverschlußstück des Überdruckventiles bildet, wobei sich dieses Ventilverschlußstück auf der seinem Ventilsitz abgewandten Seite am Kopf des Aufsatzes abstützt.

Vorzugsweise wird das Ventilverschlußstück des Überdruckventiles aus einem elastischen Formteil, z.B. aus Gummi, gebildet.

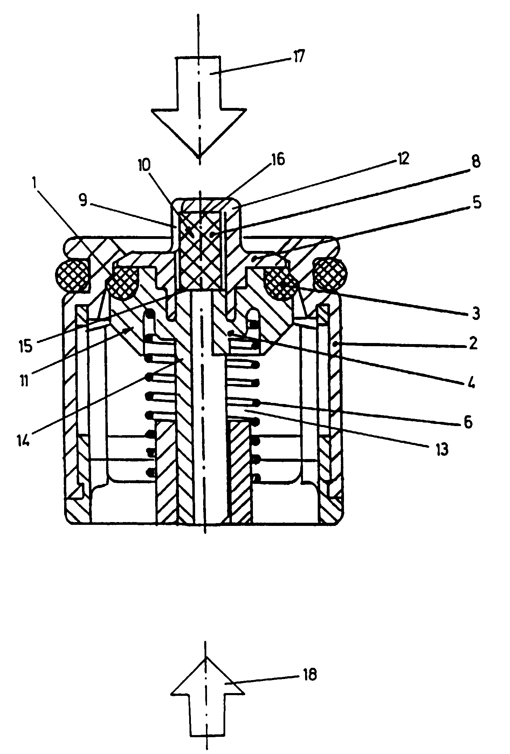

In der Zeichnung ist der Erfindungsgegenstand in einem Ausführungsbeispiel dargestellt.

Das Rückschlagventil ist in herkömmlicher Weise aufgebaut, indem das Gehäuse 2 gleichzeitig als Ventilsitz 1 ausgebildet ist, gegen den das Ventilverschlußstück 11 unter Einwirkung der Feder 6 mit Hilfe von einer Dichtung 3 abdichtet. Die Öffnungsrichtung des Rückschlagventiles ist durch den Pfeil 17 dargestellt. Das erfindungsgemäße Überdruckventil 10 ist im Ventilverschlußstück 11 des Rückschlagventiles eingebaut. Das Ventilverschlußstück 11 des Rückschlagventiles setzt sich aus einem Kegel 4, der einen rohrförmigen Fortsatz 14 mit einer seitlichen Eintrittsöffnung 13 aufweist, und einer Kegelkappe 5, die einen haubenförmigen Aufsatz 12 mit einer seitlichen Austrittsöffnung 9 besitzt, zusammen. Zwischen dem Kopf 16 des haubenförmigen Aufsatzes 12 und dem oberen Ende des rohrförmigen Fortsatzes 14, der als Ventilsitz 15 des Überdruckventiles 10 dient, ist das Ventilverschlußstück 8 des Überdruckventiles 10 im Dichtsitz vorgespannt. Das Ventilverschlußstück 8 des Überdruckventiles 10 ist hier ein elastischer Formteil.

Ist nun dieses Rückschlagventil z.B. in der Kaltwasserzuleitung einer Einhebelmischbatterie eingebaut, bei der die Kaltwasserseite abgesperrt, jedoch die Warmwasserseite geöffnet ist, und ist das Kaltwasserrückschlagventil geschlossen, so kann es durch Erhitzung des Wassers zwischen dem geschlossenen Kaltwasserventil der Armatur und dem geschlossenen Kaltswasserrückschlagventil zu hohem Druck kommen, der in Richtung des Pfeiles 18 durch die Öffnung 13 in dem rohrförmigen Fortsatz 14 auf das Überdruckventil 10 wirkt, so daß das Ventilverschlußstück 8 von dem Ventilsitz 15 abgehoben wird und das Wasser durch die seitliche Austrittöffnung 9 des haubenförmigen Aufsatzes 12 entweichen kann.

## Patentansprüche

1. Rückschlagventil, insbesondere für sanitäre Wasserarmaturen, mit einem Ventilsitz (1) und einem Ventilverschlußstück (11), das mit einem in Schließrichtung des Rückschlagventiles wirksamen, d.h. öffenbaren, Überdruckventil (10) ausgerüstet ist, dadurch gekennzeichnet, daß sein Ventilverschlußstück (11) aus einem Kegel (4) und einer Kegelkappe (5) zusammengesetzt ist, die in Schließrichtung des Rückschlagventiles mit einem eine seitliche Austrittsöffnung (9) aufweisenden, haubenförmigen Aufsatz (12) versehen ist, in dem sich das Ventilverschlußstück (8) des Überdruckventiles (10) befindet, während der Kegel (4) in Öffnungsrichtung des Rückschlagventiles einen eine seitliche Eintrittsöffnung (13) aufweisenden, rohrförmigen Fortsatz (14) besitzt, dessen in der Schließrichtung des Rückschlagventiles liegendes Ende einen Ventilsitz (15) für das Ventilverslußstück (8) des Überdruckeventiles (10) bildet, wobei sich dieses Ventilverschlußstück (8) auf der seinem Ventilsitz (15) abgewandten Seite am Kopf (16) des Aufsatzes (12) abstützt.

2. Rückschlagventil nach Anspruch 1, dadurch gekennzeichnet, daß das Ventilverschlußstück (8) des Überdruckventiles (10) aus einem elastischen Formteil gebildet ist.

3. Rückschlagventil nach den Ansprüchen 1 und 2, dadurch gekennzeichnet, daß der Formteil (8) aus Gummi besteht .

## Claims

1. A non-return valve, in particular for sanitary water fittings, comprising a valve seat (1) and a valve closure portion (11), which is provided with a pressure-relief valve (10) which is operative, that is to say openable, in the closing direction of the non-return valve, characterised in that its valve closure portion (11) is composed of a cone (4) and a cone cap (5) which in the closing direction of the non-return valve is provided with a cap-like portion (12) thereon which has a lateral discharge opening (9) and in which is disposed the valve closure portion (8) of the pressure-relief valve (10) while in the opening direction of the non-return valve the cone (4) has a tubular projection portion (14) which has a lateral intake opening (13) and whose end which is in the closing direction of the non-return valve forms a valve seat (15) for the valve closure portion (8) of the pressure-relief valve (10), wherein said valve closure portion (8) on the side remote from its valve seat (15) bears against the head (16) of the cap-like portion (12).

2. A non-return valve according to claim 1 characterised in that the valve closure portion (8) of the pressure-relief valve (10) is formed from an elastic shaped portion.

3. A non-return valve according to claims 1 and 2 characterised in that the shaped portion (8) consists of rubber.

## Revendications

1. Soupape anti-retour, en particulier pour appareils de robinetterie à eau sanitaires, comportant un siège de soupape (1) et un obturateur de soupape (11), équipé d'une soupape de surpression (10) agissant, c'est-à-dire susceptible de s'ouvrir, dans la direction de fermeture de la soupape anti-retour, caractérisée en ce que son obturateur de soupape (11) est constitué d'un cône (4) et d'un capuchon de cône (5), qui, dans la direction de fermeture de la soupape anti-retour, est pourvu d'un chapeau (12) en forme de hotte, présentant une ouverture de sortie latérale (9) et dans lequel se trouve l'opercule (8) de la soupape de surpression (10), tandis que le cône (4) comporte, dans la direction d'ouverture de la soupape anti-retour, un prolongement (14) tubulaire, présentant une ouverture d'entrée latérale (13) et dont l'extrémité située dans la position de fermeture de la soupape anti-retour constitue un siège de soupape (15) pour l'opercule (8) de la soupape de surpression (10), cet obturateur de soupape (8) prenant appui sur la tête (16) du chapeau (12), sur la face opposée à son siège de soupape (15).

2. Soupape anti-retour selon la revendication 1, caractérisée en ce que l'obturateur (8) de la soupape de surpression (10) est constitué d'une pièce profilée élastique.

3. Soupape anti-retour selon les revendications 1 et 2, caractérisée en ce que la partie profilée (8) est en caoutchouc.
